# FASCICULE DE BREVET EUROPEEN

(11) **EP 1 901 830 B1**
(45) Date de publication et mention de la délivrance du brevet: **07.09.2011**
(21) Numéro de dépôt: 06777651.8
(22) Date de dépôt: 07.07.2006
(51) Int. Cl.: B01D 53/04, B01D 53/30, G21F 9/02

(54) **PROCEDE DE CONTROLE DU TAUX DE FUITE DES FILTRES A CHARBON ACTIF**
VERFAHREN ZUR KONTROLLE DER LECKAGE-RATE VON AKTIVKOHLEFILTERN
METHOD FOR CONTROLLING LEAKAGE RATE OF ACTIVE CARBON FILTERS

(30) Priorité: 11.07.2005 FR 0552136
(43) Date de publication de la demande: 26.03.2008
(73) Titulaire: Maintenance securite installation service, 91196 Gif sur Yvette (FR)
(72) Inventeur: GONTIER, Pascal, F-91700 Sainte Genevieve des Bois (FR)
(74) Mandataire: Poulin, Gérard
(86) Numéro de dépôt international: PCT/EP2006/064021
(87) Numéro de publication internationale: WO 2007/006757

(56) Documents cités:
- DE-A1- 2 808 495
- FR-A- 2 846 892
- FR-A- 2 861 319
- US-A- 5 334 237
- DATABASE WPI Section Ch, Week 198838 Derwent Publications Ltd., London, GB; Class K07, AN 1988-268436 XP002376414 -& JP 63 196837 A (TOSHIBA CORP) 15 août 1988 (1988-08-15)

## Description

### DOMAINE TECHNIQUE

Le procédé selon l'invention permet de contrôler le taux de fuite des filtres à charbon actif.

### ÉTAT DE LA TECHNIQUE ANTÉRIEURE

Sur les sites nucléaires, les dispositifs dits « à risque » sont toujours équipés d'un ou de plusieurs filtres qui ont pour fonction de capter des matières toxiques et éviter ainsi qu'elles ne soient rejetées dans l'atmosphère ou dans un environnement occupé par du personnel humain (par exemple, les équipes de maintenance de ces dispositifs).

Ces filtres sont généralement constitués à partir de charbon actif.

En cours d'utilisation, les filtres doivent être régulièrement contrôlés. Pour cela, on vérifie leur taux de fuite, c'est-à-dire la quantité de matière qu'il devrait capter et qu'il ne capte pas. Il existe plusieurs méthodes permettant de vérifier ce taux de fuite.

Par exemple, pour mesurer le taux de fuite des filtres à charbon actif, la société EDF utilise de l'iodure de méthyle (doté d'iode 127). L'inconvénient de ce produit est qu'il est particulièrement toxique pour l'homme et pour l'environnement. En effet, l'iodure de méthyle provoque des irritations des yeux et de la peau, des nausées, vomissements, diarrhée, troubles visuels. Il peut provoquer des troubles psychiques persistants et des dommages permanents au système nerveux central, conduire au coma et à la mort. Des effets cancérogènes sont également soupçonnés chez l'homme. De plus, la société EDF utilise un dispositif spécifique pour mesurer l'iodure de méthyle qui est fabriqué par une société américaine. Or cette société américaine a arrêté de produire ces dispositifs de mesure et n'assure plus la maintenance des anciens dispositifs. Il est donc nécessaire de trouver une autre méthode de mesure du taux de fuite.

La société CAMFIL, qui fabrique des filtres à charbon actif, utilise une méthode de mesure utilisant un chromatographe comprenant un détecteur à ionisation de flamme (FID), qui détecte en continu la présence du cyclohexane dans le circuit de ventilation en amont et en aval de l'endroit où est situé le filtre à tester. L'inconvénient de cette méthode est que le détecteur à ionisation de flamme emploie du dihydrogène comme carburant. Or le dihydrogène est explosif et ne peut donc pas être utilisé dans un secteur à risque tel qu'une centrale nucléaire. De plus, le chromatographe FID est un dispositif de mesure lourd et encombrant : il n'est donc pas facilement déplaçable et ne peut mesurer le taux de fuite de filtres situés dans des conduits de ventilation éloignés. Le document JP-A-63196837 divulgue également un procédé pour tester un filtre à charbon actif. Un gaz rare non-radio-actif est utilisé comme traceur. Sa concentration est mesurée à l'aide d'un chromatographe.

Le but de l'invention est donc de trouver un procédé de contrôle du taux de fuite d'un filtre à charbon actif qui puisse être utilisable dans le secteur nucléaire, qui soit fiable et moins dangereux, et qui puisse être utilisable « in-situ ».

### EXPOSE DE L'INVENTION

Ce but est atteint par un procédé de mesure du taux de fuite d'un filtre à charbon actif, caractérisé en ce qu'il comprend les étapes suivantes :
- injection, dans le circuit comprenant le filtre à tester, d'un mélange de gaz comprenant un gaz vecteur et un gaz piégeable par ledit filtre à tester,
- prélèvement, en amont et en aval du filtre, d'une quantité relative dudit mélange de gaz dans des moyens de stockage,
- mesure de la quantité de gaz piégeable contenue dans chacun des moyens de stockage à l'aide d'un chromatographe à photoionisation,
- détermination du taux de fuite par comparaison de la quantité relative de gaz piégeable présent en aval et de la quantité relative de gaz piégeable présent en amont du filtre.

Les prélèvements en amont et en aval du filtre correspondent à un prélèvement à un endroit situé avant le filtre et un prélèvement à un endroit situé après le filtre dans le circuit.

Par « mesure de la quantité de gaz piégeable contenue dans chacun des moyens de stockage », il faut comprendre qu'on mesure la quantité de gaz piégeable présent dans le mélange de gaz prélevé en amont et en aval du filtre.

Le circuit comprenant le filtre à tester peut être un circuit de ventilation ou un circuit de sauvegarde, par exemple en cas de fuite d'un composé radioactif sur un site nucléaire.

Généralement, on prélève la même quantité de gaz en amont et en aval du filtre. Pour obtenir la détermination du taux de fuite, il suffit donc de faire le rapport (fraction) de la mesure du gaz piégeable en aval sur la mesure du gaz piégeable en amont. Pour vérifier l'état du filtre ou vérifier s'il est bien positionné, on peut comparer cette valeur de taux de fuite obtenue avec un tableau de valeurs, et en particulier avec une valeur limite à partir de laquelle on estime que le taux de fuite est trop important et qu'il faut changer le filtre ou le repositionner correctement.

Avantageusement, pour réaliser l'injection, on utilise un dispositif spécifique mis au point pour injecter le produit « gaz piégeable » (par exemple le cyclohexane) dans le circuit contenant le filtre (par exemple une gaine de ventilation) sous forme de gaz. La totalité du produit (par exemple environ 5 mL) est injectée en quelques secondes. Le dispositif d'injection est conçu de manière à rendre reproductible l'injection du produit.

Avantageusement, le gaz piégeable est un gaz non toxique pour l'homme et/ou l'environnement.

Selon une première variante, le gaz piégeable est le cyclohexane.

Selon une deuxième variante, le gaz piégeable est la butanone.

Avantageusement, le gaz piégeable est un gaz ayant une rétention par le charbon actif comprise entre 25 et 30%.

Avantageusement, le gaz piégeable est choisi parmi l'acétate de butyle, l'acétate de butyle, l'acide acétique, l'acide acrylique, l'acide lactique, l'acide sulfurique, l'acrylate de méthyle, l'acrylonitrile, l'alcool butylique, l'alcool éthylique, l'alcool propylique, le benzène, le brome, le chlorobenzène, le chlorobutadiène, le chloroforme, le chloronitropropane, le chloropicrine, le chlorure de méthylène, le cyclohexanol, le dibromoéthane, le diéthylcétone, le dioxane, l'essence, l'éthybenzène, les goudrons, les graisses brûlées, l'iode, le kérosène, le mercaptans, le monochlorobenzène, la naphtaline, le nitrobenzène, les parfums, le perchloroéthylène, le phénol, le silicate d'éthyle, le styrène monomère, la térébenthine, le tétrachloréthane, le tétrachlorure de carbone, le toluène, le trichloréthylène, la vapeur d'huile, le xylène.

Avantageusement, les moyens de stockage sont des récipients ou réservoirs étanches, par exemple des sacs plastiques étanches du type des sacs TEDLAR®. L'utilisation de récipients ou réservoirs étanches permet de refaire les mesures dans le temps (par exemple pour revérifier des mesures réalisées la veille).

Le procédé selon l'invention a l'avantage de permettre de contrôler le taux de fuite « in-situ » des filtres à charbon actif montés dans des systèmes de ventilation nucléaire. En effet, d'une part, le procédé selon l'invention comprend un dispositif de mesure (chromatographe PID) qui n'utilise pas de produit inflammable comme le chromatographe FID par exemple, et d'autre part, le chromatographe PID utilisé est peu encombrant et peut donc être déplacé facilement.

Avec ce procédé, on remplace la méthode actuelle de contrôle avec de l'iodure de méthyle ICH₃ marqué à l'iode 127 par une méthode de contrôle plus fiable et moins dangereuse.

De plus, l'utilisation d'un chromatographe à photoionisation (PID) permet d'évaluer l'efficacité de filtres à partir d'une injection utilisant une très faible quantité de produit (par exemple du cyclohexane).

### EXPOSÉ DÉTAILLÉ DE MODES DE RÉALISATION PARTICULIERS

Comme exemple d'application du procédé selon l'invention, nous allons effectuer le contrôle du taux de fuite d'un filtré à charbon actif à l'aide d'un chromatographe PID. Notons que les filtres à charbon actif sont parfois également appelés filtres « piège à iode » car ces filtres peuvent également piéger l'iode. Le charbon actif servant à former les filtres est préparé à partir de charbon de houille ou de noix de coco. Il est soumis à des traitements d'activation thermique ou chimique qui lui confère une surface spécifique élevée de l'ordre de 1000 à 1700 m²/g. Les pores du charbon actif ont des diamètres de l'ordre du nanomètre, c'est-à-dire du même ordre de grandeur que les molécules. L'adsorption par le charbon actif de molécules sous forme de gaz ou de vapeur dilués dans l'air dépend de plusieurs facteurs, et en particulier de la température, de l'hygrométrie, de la concentration du gaz ou de la vapeur.

Pour quantifier le gaz piégeable par le filtre présent en amont et en aval du filtre afin d'obtenir le taux de fuite du filtre, on utilise un chromatographe PID. Le chromatographe PID comporte un détecteur à photoionisation qui ionise les composants élués apportés par le gaz vecteur à travers une colonne en utilisant une source de rayons ultraviolets. Seuls les composants élués qui présentent une énergie d'ionisation inférieure à l'énergie photonique de la source de lumière ultraviolette sont ionisés et collectés sur une électrode. Il est donc important de choisir une source de rayons ultraviolets d'énergie adéquate en fonction des potentiels d'ionisation des composés que l'on désire analyser. Dans l'exemple ci-dessous, on va introduire du cyclohexane dans le gaz vecteur ; la lampe UV est donc choisie avec une énergie de 10,6 eV. La variation de courant qui résulte de l'ionisation des composants est mesurée avec un électromètre et est fonction de la concentration des composants élués contenus dans le gaz vecteur, et par conséquent est fonction de la quantité de gaz piégeable contenu dans le gaz vecteur.

L'échantillon à détecter (ici le gaz piégeable par le filtre) est introduit dans le chromatographe sous forme gazeuse et est transporté par un gaz vecteur qui permet d'éluer les composants de l'échantillon dans la colonne de chromatographie du chromatographe. On rappelle qu'un chromatographe comprend les éléments principaux suivants : une colonne de chromatographie, un dispositif d'injection, c'est-à-dire un moyen par lequel l'échantillon est introduit dans la colonne de chromatographie en phase gazeuse, un détecteur et système de traitement de données. Le gaz vecteur doit être suffisamment pur et inerte vis-à-vis de l'échantillon pour ne pas fausser les mesures de l'échantillon. Les gaz vecteurs les plus couramment utilisés sont l'hydrogène, le mélange hélium-méthane, l'azote, le mélange argon-méthane et l'air. Le choix du gaz vecteur dépend des conditions d'utilisation. Dans notre exemple, comme on veut calculer le taux de fuite d'un filtre à charbon actif généralement utilisé dans des gaines de ventilation, on choisit d'utiliser de l'air reconstitué comme gaz vecteur, afin de s'approcher au maximum des conditions de prélèvement en conditions réelles.

En pratique, le procédé selon l'invention permet de réaliser le contrôle du filtre à charbon actif directement sur le circuit de ventilation dans lequel il est situé (mesure « in-situ »). Dans notre exemple d'application, nous réalisons les mesures en plaçant le filtre à charbon actif dans un banc d'essai. En d'autres termes, pour contrôler le taux de fuite du filtre, on réalise un banc d'essai qui va simuler un circuit ou une gaine de ventilation comprenant un filtre à charbon actif à tester. Le banc d'essai comprend un filtre à très haute efficacité (THE), un filtre à charbon actif et un filtre Haute Efficacité (HE). Le filtre THE assure la protection du filtre à charbon actif vis-à-vis des poussières, tandis que le filtre Haute Efficacité (HE), installé en entrée du circuit de ventilation, assure l'absence d'intrusion de poussières ou résidus issus de l'extérieur dans la gaine de ventilation. Le banc d'essai est doté d'une canalisation parallèle de faible diamètre qui contourne le filtre à charbon actif. Ce conduit parallèle (ou « by-pass » en anglais) permet de simuler des fuites sur le filtre à charbon actif ou « piège à iode » en plaçant des diaphragmes de diamètre connus dans le conduit. Le banc d'essai comporte également un ventilateur, qui fait circuler le gaz contenu dans le banc d'essai, un régulateur permettant de régler le débit de gaz dans le banc d'essai et des connections permettant d'injecter et/ou de prélever du gaz dans le banc d'essai. Le calcul du taux de fuite du filtre va permettre de déterminer, par exemple, si le filtre est bien positionné (montage correct du filtre) et qu'il n'a pas subi de détérioration lors de la manutention.

Pour la réalisation des essais visant à contrôler le taux de fuite du filtre à charbon actif, on utilise un générateur de cyclohexane sous forme gazeuse, associé à un système de prélèvement en amont et en aval du filtre à charbon actif à contrôler. Dans notre exemple, le générateur aspire le cyclohexane sous forme liquide à l'intérieur d'un four chauffé à une température de 200°C ; le cyclohexane est alors vaporisé et injecté dans le banc d'essai. Dans le même temps, on effectue un prélèvement par aspiration en amont et en aval du filtre à charbon actif de la même quantité d'air dans des sacs de prélèvement type TEDLAR®. Par exemple, la durée d'injection peut être de 30 secondes et le temps de prélèvement d'1 minute. Le temps d'injection et le temps de prélèvement peuvent être ajustés en fonction des besoins, du débit du circuit de ventilation à tester ou de la contenance du sac TEDLAR® utilisé.

Lors de nos essais, nous avons utilisé un filtre à charbon actif de la société CAMFIL de dimension 610 x 610 x 292 ayant un volume de charbon actif de 65 dm³, une surface utile du lit de charbon actif de 130 dm³ et un débit maximum de 1200 m³/h (données fournies par CAMFIL).

Dans notre banc d'essai, on injecte donc, sous forme gazeuse, une quantité déterminée d'un gaz piégeable par le filtre pour un débit du banc de contrôle fixé. Par exemple, on injecte 5 ml de cyclohexane dans le banc d'essai en amont du filtre à contrôler pour un débit du banc d'essai fixé à 1200 m³/h. Nous devons travailler à des débits compris entre 750 m³/h et 50000 m³/h (1200 m³/h est le débit maximum pour un filtre à charbon actif ; mais dans un circuit de ventilation, il peut y avoir plusieurs filtres disposés en parallèle ; le débit est alors multiplié par le nombre de filtres). On peut donc choisir d'injecter une quantité différente de gaz selon le débit choisi (qui dépendra des caractéristiques du filtre) ou suivant la nature du gaz choisi.

Dans notre exemple, on a choisi le cyclohexane (C₆H₁₂), car sous forme gazeuse, il est parfaitement retenu par le filtre à charbon actif. Mais on peut également choisir tout autre produit gazeux qui possède les mêmes caractéristiques que le cyclohexane et qui soit retenu de la même manière par le filtre à charbon actif. Le choix du gaz se fera par exemple en fonction des besoins de l'utilisateur, par la disponibilité du produit ou par la toxicité du produit pour l'utilisateur ou pour son environnement.

On donne ci-dessous une liste des produits gazeux susceptibles d'être utilisés à la place du cyclohexane. Ces produits sont en effet fortement retenus par les filtres à charbon actif (rétention de l'ordre de 25 à 30%).

Liste des produits sous forme gazeuse piégeables par les filtres à charbon actif :

Acétate de butyle, acide acétique, acide acrylique, acide lactique, acide sulfurique, acrylate de méthyle, acrylonitrile, alcool butylique, alcool éthylique, alcool propylique, benzène, brome, chlorobenzène, chlorobutadiène, chloroforme, chloronitropropane, chloropicrine, chlorure de méthylène, cyclohexane, cyclohexanol, dibromoéthane, diéthylcétone, dioxane, essence, éthybenzène, goudrons, graisses brûlées, iode, kérosène, mercaptans, monochlorobenzène, naphtaline, nitrobenzène, parfums, perchloroéthylène, phénol, silicate d'éthyle, styrène monomère, térébenthine, tétrachloréthane, tétrachlorure de carbone, toluène, trichloréthylène, vapeur d'huile, xylène.

De préférence, le produit gazeux est choisi pour être le moins toxique possible et détectable à l'aide du chromatographe PID. On choisit un gaz qui soit non toxique et piégeable par le charbon actif. Le cyclohexane est un bon choix, mais on peut également utiliser la butanone, l'acétate d'éthyle, le cyclohexène...

Pour réaliser l'injection du gaz, on remplit un four de 5 ml de cyclohexane sous forme liquide ; une fois cette opération réalisée, on chauffe le four et le cyclohexane s'évapore. Le gaz ainsi formé est propulsé avec de l'air comprimé dans le banc de contrôle.

En même temps que l'injection du gaz dans le banc d'essai, un prélèvement du gaz est effectué en amont et en aval du filtre charbon actif. Dans la pratique, on préfère que l'injection du cyclohexane sous forme gazeuse déclenche automatiquement les prélèvements dans les sacs AMONT et AVAL. De même, l'arrêt des prélèvements est automatique, par exemple lorsque les sacs TEDLAR® amont et aval sont pleins.

Afin de récupérer une quantité de gaz suffisante et représentative, on utilise une pompe dont le débit de prélèvement est connu. Par exemple, on peut utiliser une pompe de prélèvement ayant un débit de prélèvement d'environ 30 litres par minute qui va prélever une partie du gaz contenu dans le banc de contrôle en amont et en aval du filtre et le transférer d'une part, dans le moyen de stockage situé en amont et d'autre part, dans le moyen de stockage situé en aval du filtre, respectivement. De préférence, on attendra que les débits de prélèvement en amont et en aval soient stabilisés avant de procéder aux prélèvements. La régulation des débits peut être assurée par des débitmètres massiques.

Les moyens de stockage sont par exemple des sacs de TEDLAR® d'une contenance de 50L. Ces sacs TEDLAR® sont robustes, peu encombrants (quand non remplis) et facile d'utilisation. Comme le débit de la pompe de prélèvement est de 30 litres par minute, les sacs TEDLAR® sont remplis en un peu plus d'une minute.

Puis on effectue l'analyse du cyclohexane. Comme on l'a précisé précédemment, l'analyse du cyclohexane est réalisée à l'aide d'un chromatographe à photoionisation ou PID. Pour cela, on relie le sac TEDLAR® correspondant au prélèvement amont au chromatographe PID et on calcule sa concentration. On fait de même ensuite pour le sac TEDLAR® correspondant au prélèvement aval. Une partie du gaz contenu dans le sac TEDLAR® (amont ou aval) est injecté, par boucle d'injection d'un demi centimètre cube, directement dans une précolonne faisant office d'injecteur. Le gaz est ensuite injecté dans une colonne d'analyse du chromatographe. La colonne d'analyse possède un garnissage polyéthylène glycol adapté pour l'analyse des alcools, cétones et aldéhydes, et en particulier du cyclohexane.

A la sortie de la colonne, le gaz atteint le détecteur PID, composé d'un capteur à électrodes et d'une lampe à ultraviolet qui fournit des radiations lumineuses de 10,6 eV et ionise le gaz. La variation de courant qui résulte de l'ionisation du gaz est mesurée et intégrée, puis restituée sous forme d'un graphique donnant l'intensité en fonction du temps. Le pic issu de l'émission d'électron est proportionnel au nombre de molécules excitées. Une valeur précise de la concentration dans le gaz porteur est alors obtenue.

Les résultats obtenus par le chromatographe sont sous forme de graphes dans lesquels la présence du cyclohexane est signalée par un pic ; le calcul de l'aire du pic fournit la concentration en ppm du cyclohexane.

Le rapport « aire du pic en amont » sur « aire du pic en aval » du cyclohexane permet de déterminer le taux de fuite du filtre. Ce taux de fuite est ensuite comparé à une valeur limite pour voir si le filtre est endommagé et/ou mal positionné dans le circuit, ici un circuit de ventilation.

Nous avons réalisé plusieurs essais sur ce banc d'essai. Pour tous les essais réalisés, le banc d'essai a un débit de 1200m³/h. On injecte 5 mL de cyclohexane dans le banc d'essai et le temps d'injection est de 30 secondes. Le prélèvement en amont (ou en aval) est effectué à l'aide d'une pompe ayant un débit de 30 L par minute et le prélèvement dure pendant 1 minute.

Le premier essai est un essai de test réalisé avec la canalisation parallèle fermée pour vérifier qu'on obtient bien la même quantité de cyclohexane aux points de prélèvement AMONT et AVAL lorsqu'il n'y a pas de filtre à charbon actif placé dans le banc d'essai.

| | Quantité en | Quantité en |
|---|---|---|
| | amont (ppm) | aval (ppm) |
| Mesure effectuée juste | 19,75 | 18,71 |
| après le prélèvement | | |
| Mesure effectuée 15 | | |
| minutes après le | 19,32 | 18,67 |
| prélèvement | | |
| Mesure effectuée le | 19,04 | 18,09 |
| lendemain | | |

En comparant les résultats, on constate que les prélèvements en amont et en aval du filtre à charbon actif sont représentatifs.

Le deuxième essai est réalisé avec la canalisation parallèle fermée, mais en plaçant le filtre à charbon actif dans le banc d'essai.

On obtient les résultats suivants :

| | Quantité en | Quantité en |
|---|---|---|
| | amont (ppm) | aval (ppm) |
| Mesure effectuée juste | 36,65 | 9,79.10⁻³ |
| après le prélèvement | | |

Le taux de fuite du filtre à charbon actif testé est de 2,67.10⁻⁴ (9,79.10⁻³ ppm / 36,35 ppm).

L'efficacité du filtre est de 3744 (36,65 ppm / 9,79.10⁻³ ppm).

Avec ces valeurs de taux de fuite et d'efficacité, on peut considérer que le filtre est bien placé dans le banc d'essai et qu'il est non endommagé.

Suivant la mise en oeuvre, les critères d'efficacité varient. L'efficacité minimale en dessous de laquelle il faut remplacer le filtre à charbon actif varie de 300 à 1000.

Le troisième essai est réalisé en plaçant le filtre à charbon actif dans le banc d'essai et en ouvrant totalement la canalisation parallèle (aucun diaphragme n'est disposé dans la canalisation parallèle).

On obtient les résultats suivants :

| | Quantité en | Quantité en |
|---|---|---|
| | amont (ppm) | aval (ppm) |
| Mesure effectuée juste | 26,49 | 148.10⁻³ |
| après le prélèvement | | |

Le taux de fuite du filtre à charbon actif testé est de 5,59.10⁻³ (148.10⁻³ ppm / 26,49 ppm).

L'efficacité du filtre est de 179 (26,49 ppm / 148.10⁻³ ppm).

Avec ces valeurs de taux de fuite et d'efficacité, on peut considérer que le filtre à charbon actif n'est pas efficace. Il y a une fuite importante.

Le quatrième essai est réalisé en plaçant le filtre à charbon actif dans le banc d'essai et en plaçant un diaphragme de 2 mm dans la canalisation parallèle.

On obtient les résultats suivants :

| | Quantité en | Quantité en |
|---|---|---|
| | amont (ppm) | aval (ppm) |
| Mesure effectuée juste | 26,44 | 76, 14.10⁻³ |
| après le prélèvement | | |

Le taux de fuite du filtre à charbon actif testé est de 2,77.10⁻³ (76,14.10⁻³ ppm / 27,44 ppm).

L'efficacité du filtre est de 360 (27,44 ppm / 76,14.10⁻³ ppm).

Avec ces valeurs de taux de fuite et d'efficacité, on peut considérer que le filtre est plus efficace que précédemment ; on voit que notre procédé permet d'évaluer le taux de fuite suivant le diamètre de la fuite.

Enfin, le cinquième essai est réalisé en plaçant le filtre à charbon actif dans le banc d'essai et en plaçant un diaphragme de 0,3 mm dans la canalisation parallèle.

On obtient les résultats suivants :

| | Quantité en | Quantité en |
|---|---|---|
| | amont (ppm) | aval (ppm) |
| Mesure effectuée juste | 33,34 | 15,16.10⁻³ |
| après le prélèvement | | |

Le taux de fuite du filtre à charbon actif testé est de 4,54.10⁻⁴ (15,16.10⁻³ ppm / 33,34 ppm).

L'efficacité du filtre est de 2199 (33,34 ppm / 15,16.10⁻³ ppm).

Avec ces valeurs de taux de fuite et d'efficacité, on peut considérer que le filtre est efficace.

En conclusion, on peut considérer que notre procédé selon l'invention est efficace pour évaluer de très faible taux de fuite.

Le procédé selon l'invention est avantageux car il permet de contrôler de manière fiable le taux de fuite de filtres à charbon actif sans avoir les contraintes de l'emploi d'un produit toxique. Comme on réalise les prélèvements dans des moyens de stockage et que ces moyens de stockage sont ensuite déplacés vers le dispositif de mesure de type chromatographe PID, on peut faire des mesures sur différents systèmes sur un même site avec un seul et même dispositif de mesure. En particulier, l'avantage supplémentaire de l'utilisation du chromatographe PID est qu'en plus d'être utilisable en milieu à risque, par exemple sur un site comprenant un réacteur nucléaire, il possède en outre une sensibilité très étendue allant du ppm (partie par millions) au ppb (partie par billion).

Actuellement, l'efficacité des filtres à charbon actif est mesurée à l'aide d'une méthode normalisée (norme NFM 62-206) qui utilise de l'iodure de méthyle (CH₃I) marqué à l'iode radioactive 131. Ce produit est très toxique et radioactif. On pourrait donc envisager d'utiliser le procédé selon l'invention pour effectuer un test d'étanchéité sur un filtre à charbon actif ou piège à iode avant la réalisation du test normalisé d'efficacité (norme NFM 62-206). L'essai préliminaire de mesure du taux de fuite selon l'invention, par exemple en utilisant du cyclohexane, garantirait ainsi un faible risque de rejet de l'iode radioactif 131 dans l'atmosphère dans le cas où le filtre à charbon actif serait défectueux.

## Revendications

1. Procédé de mesure du taux de fuite d'un filtre à charbon actif, **caractérisé en ce qu'**il comprend les étapes suivantes :
- injection, dans le circuit comprenant le filtre à tester, d'un mélange de gaz comprenant un gaz vecteur et un gaz piégeable par ledit filtre à tester,
- prélèvement, en amont et en aval du filtre, d'une quantité relative dudit mélange de gaz dans des moyens de stockage,
- mesure de la quantité de gaz piégeable contenue dans chacun des moyens de stockage à l'aide d'un chromatographe à photoionisation,
- détermination du taux de fuite par comparaison de la quantité relative de gaz piégeable présent en aval et de la quantité relative de gaz piégeable présent en amont du filtre.

2. Procédé de mesure selon la revendication précédente, **caractérisé en ce que** le gaz piégeable est un gaz non toxique pour l'homme et/ou l'environnement.

3. Procédé de mesure selon la revendication 1 ou 2, **caractérisé en ce que** le gaz piégeable est le cyclohexane.

4. Procédé de mesure selon la revendication 1 ou 2, **caractérisé en ce que** le gaz piégeable est la butanone.

5. Procédé de mesure selon l'une quelconque des revendications précédentes, **caractérisé en ce que** le gaz piégeable est un gaz ayant une rétention par le charbon actif comprise entre 25 et 30%.

6. Procédé de mesure selon la revendication précédente, **caractérisé en ce que** le gaz piégeable est choisi parmi l'acétate de butyle, l'acide acétique, l'acide acrylique, l'acide lactique, l'acide sulfurique, l'acrylate de méthyle, l'acrylonitrile, l'alcool butylique, l'alcool éthylique, l'alcool propylique, le benzène, le brome, le chlorobenzène, le chlorobutadiène, le chloroforme, le chloronitropropane, le chloropicrine, le chlorure de méthylène, le cyclohexanol, le dibromoéthane, le diéthylcétone, le dioxane, l'essence, l'éthybenzène, les goudrons, les graisses brûlées, l'iode, le kérosène, le mercaptans, le monochlorobenzène, la naphtaline, le nitrobenzène, les parfums, le perchloroéthylène, le phénol, le silicate d'éthyle, le styrène monomère, la térébenthine, le tétrachloréthane, le tétrachlorure de carbone, le toluène, le trichloréthylène, la vapeur d'huile, le xylène.

7. Procédé de mesure selon l'une quelconque des revendications précédentes, **caractérisé en ce que** les moyens de stockage sont des récipients étanches, par exemple des sacs plastiques étanches du type des sacs TEDLAR®.

## Claims

1. Method for measuring the leakage rate of an activated carbon filter, **characterised in that** it comprises the following steps:
- injecting into the circuit comprising the filter to be tested a gas mixture comprising a carrier gas and a gas trappable by said filter to be tested,
- sampling, upstream and downstream of the filter, a relative amount of said gas mixture in storage means,
- measuring the amount of trappable gas contained in each of the storage means using a photoionisation chromatograph,
- determining the leakage rate by comparing the relative amount of trappable gas present downstream and the relative amount of trappable gas present upstream of the filter.

2. Measuring method according to the previous claim, **characterised in that** the trappable gas is a non toxic gas for humans and/or the environment.

3. Measuring method according to claim 1 or 2, **characterised in that** the trappable gas is cyclohexane.

4. Measuring method according to claim 1 or 2, **characterised in that** the trappable gas is butanone.

5. Measuring method according to any one of the previous claims, **characterised in that** the trappable gas is a gas with a retention by the activated carbon comprised between 25 and 30%.

6. Measuring method according to the previous claim, **characterised in that** the trappable gas is chosen among butyl acetate, acetic acid, acrylic acid, lactic acid, sulphuric acid, methyl acrylate, acrylonitrile, butyl alcohol, ethyl alcohol, propyl alcohol, benzene, bromium, chlorobenzene, chlorobutadiene, chloroform, chloronitropropane, chloropicrin, methylene chloride, cyclohexanol, dibromoethane, diethylketone, dioxane, petrol, ethylbenzene, tars, burnt fats, iodine, kerosene, mercaptans, monochlorobenzene, naphthalene, nitrobenzene, fragrances, perchloroethylene, phenol, ethyl silicate, styrene monomer, turpentine, tetrachloroethane, carbon tetrachloride, toluene, trichlorethylene, oil vapour, xylene.

7. Measuring method according to any one of the previous claims, **characterised in that** the storage means are leak tight recipients, for example PEDLAR® type leak tight plastic bags.

## Patentansprüche

1. Verfahren zum Messen der Leckrate eines Aktivkohlefilters, **dadurch gekennzeichnet, dass** es die folgenden Schritte aufweist:
- Einführen eines Gasgemisches, das ein Trägergas und ein von dem zu testenden Filter einfangbares Fanggas aufweist, in den Leitungskreis, der das zu testende Filter aufweist,
- Entnahme einer relativen Menge des Gasgemisches stromaufwärts und stromabwärts des Filters und Überführen in Aufbewahrungseinrichtungen,
- Messen der in jeder der Aufbewahrungseinrichtungen enthaltenen Fanggasmenge mit Hilfe einer Photoionisation-Chromatographie,
- Ermitteln der Leckrate durch Vergleichen der stromabwärts vorhandenen relativen Fanggasmenge und der stromaufwärts des Filters vorhandenen relativen Fanggasmenge.

2. Messverfahren nach dem vorstehenden Anspruch, **dadurch gekennzeichnet, dass** das Fanggas ein für Mensch und/oder Umwelt nicht-toxisches Gas ist.

3. Messverfahren nach Anspruch 1 oder 2, **dadurch gekennzeichnet, dass** das Fanggas Cyclohexan ist.

4. Messverfahren nach Anspruch 1 oder 2, **dadurch gekennzeichnet, dass** das Fanggas Butanon ist.

5. Messverfahren nach einem der vorstehenden Ansprüche, **dadurch gekennzeichnet, dass** das Fanggas ein Gas ist, dessen Rückhaltung in Aktivkohle zwischen 25 und 30% beträgt.

6. Messverfahren nach dem vorstehenden Anspruch, **dadurch gekennzeichnet, dass** das Fanggas ausgewählt ist aus: Butylacetat, Ethansäure, Acrylsäure, Milchsäure Schwefelsäure, Methylacrylat, Acrylnitril, Butylalkohol, Ethylalkohol, Propylalkohol, Benzol, Brom, Chlorbenzol, Chlorbutadien, Chloroform, Chlornitropropan, Chloropikrin, Methylenchlorid, Cyclohexanol, Dibromethan, Diethylketon, Dioxan, Motorbenzin, Ethylbenzol, Teere, Brennfette, Jod, Kerosin, Mercaptan, Monochlorbenzol, Naphthalin, Nitrobenzol, Parfüme, Perchlorethylen, Phenol, Ethylsilikat, Styrolmonomer, Tereben, Tetrachlorethan, Kohlenstofftetrachlorid, Toluen, Trichlorethylen, Öldampf, Xylol.

7. Messverfahren nach einem der vorstehenden Ansprüche, **dadurch gekennzeichnet, dass** die Aufbewahrungseinrichtungen dichte Behälter sind, beispielsweise dichte Kunststoffbeutel des Typs TEDLAR®-Beutel.
